# EUROPÄISCHE PATENTANMELDUNG

(11) **EP 0 858 037 A1**
(43) Veröffentlichungstag der Anmeldung: **12.08.1998**
(21) Anmeldenummer: 98100083.9
(22) Anmeldetag: 06.01.1998
(51) Int. Cl.: G06F 15/02

(54) **Preisanzeigevorrichtung**

(30) Priorität: 08.01.1997 DE 29700214 U; 09.04.1997 DE 19714560
(71) Anmelder: Heinsberg, Hans-Peter, 50968 Köln (DE); Hucklenbroich, Hans-Josef, 52399 Merzenich (DE)
(72) Erfinder: Heinsberg, Hans-Peter, 50968 Köln (DE); Hucklenbroich, Hans-Josef, 52399 Merzenich (DE)
(74) Vertreter: Freischem, Stephan, Dipl.-Ing.

(57) **Zusammenfassung**

Die Erfindung betrifft eine Preisanzeigevorrichtung mit Eingabeelementen zur Eingabe der Ziffern von 0 bis 9 und eines Trennzeichens wie Punkt oder Komma, mit einer Anzeigevorrichtung zur digitalen Darstellung von Zahlenwerten und mit einem Rechenwerk zur Durchführung von Rechenoperationen.

Aufgabe der Erfindung ist es, eine Preisanzeigevorrichtung zu schaffen, die für die Verbraucher bei der geplanten Währungsumstellung der Mitgliedsstaaten der Europäischen Union hilfreich ist.

Diese Aufgabe wird erfindungsgemäß dadurch gelöst, daß die Preisanzeigevorrichtung mindestens ein Währungs-Auswahlelement umfaßt, bei dessen Betätigung ein in einer ersten Währung durch die Anzeigevorrichtung angezeigter Wert mittels des Rechenwerks mit einem festen Umrechnungsfaktor multipliziert wird und der entsprechende Wert in einer zweiten Währung durch die Anzeigevorrichtung dargestellt wird.

## Beschreibung

Die Erfindung betrifft eine Preisanzeigevorrichtung mit Eingabeelementen zur Eingabe der Ziffern von 0 bis 9 und eines Trennzeichens wie Punkt oder Komma, mit einer Anzeigevorrichtung zur digitalen Darstellung von Zahlenwerten und mit einem Rechenwerk zur Durchführung von Rechenoperationen.

Eine derartige Preis- oder Zahlenwertanzeigevorrichtung kann beispielsweise von einem Taschenrechner gebildet werden, wobei dieser lediglich die Zifferntasten 0 bis 9, eine Kommataste und eine Digitalanzeige umfassen muß.

Aufgabe der Erfindung ist es, eine Preisanzeigevorrichtung zu schaffen, die für die Verbraucher bei der geplanten Währungsumstellung der Mitgliedsstaaten der Europäischen Union hilfreich ist.

Diese Aufgabe wird erfindungsgemäß dadurch gelöst, daß die Preisanzeigevorrichtung mindestens ein Währungs-Auswahlelement umfaßt, bei dessen Betätigung ein in einer ersten Währung durch die Anzeigevorrichtung angezeigter Wert mittels des Rechenwerks mit einem festen Umrechnungsfaktor multipliziert wird und der entsprechende Wert in einer zweiten Währung durch die Anzeigevorrichtung dargestellt wird.

Die erfindungsgemäße Preisanzeigevorrichtung ermöglicht es dem Verbraucher, nach der Umstellung der Währung seines Heimatlandes auf die europäische Einheitswährung EURO einen Preis oder einen sonstigen Betrag, den er in der für ihn ungewohnten Währung EURO eingibt, durch einfache Betätigung des Währungs-Auswahlelementes in seiner gewohnten Landeswährung darstellen zu lassen. Insbesondere in Ländern mit Landeswährungen, deren Einheitswert erheblich von dem Einheitswert der Währung EURO abweicht, (z.B. Italien mit einem Faktor 2000, Belgien mit einem Faktor 40) ist es für den Verbraucher zumindest in der Anfangszeit sehr hilfreich, auf einfache Weise einen Preis oder sonstigen Währungsbetrag in seiner gewohnten Landeswährung zu erfahren. Dies ermöglicht ihm, den EURO-Preis mit den ihm bekannten Erfahrungswerten in seiner Landeswährung zu vergleichen.

Wesentlich ist, daß die Preisanzeigevorrichtung allein das Umrechnen zwischen zwei Währungen, nämlich der Währung EURO und der jeweiligen Landeswährung, durch Multiplikation mit zwei festen Umrechnungsfaktoren, genauer gesagt einerseits mit einem festen Umrechnungsfaktor und andererseits mit dessen Kehrwert, ermöglicht. Hierdurch wird eine gegenüber bekannten programmierbaren Taschenrechnern wesentlich vereinfachte Bedienung ermöglicht. Jeder Wert kann durch einfaches Bedienen einer Taste von einer Währung in die andere umgerechnet werden. Vorheriges Programmieren oder Eingeben des Umrechnungsfaktors bei jedem Umrechnen entfällt. Der Umrechnungsfaktor kann fest auf der elektronischen Schaltung der Preisanzeigevorrichtung abgespeichert werden, da die Mitgliedstaaten der Europäischen Union schon lange vor der Einführung des EURO den Umrechnungsfaktor zu ihrer Landeswährung festlegen. Alternativ kann ein programmierbarer Permanentspeicher (EEPROM) zur Aufnahme des Umrechnungsfaktors vorgesehen sein. Durch Umschalten der Preisanzeigevorrichtung in einen Eingabemodus, z.B. durch Eingabe einer bestimmten Tastenkombination oder durch Drücken einer verdeckten oder versenkten Taste, kann der Umrechnungsfaktor in die Preisanzeigevorrichtung eingegeben werden und wird dort gespeichert. So kann die gleiche Preisanzeigevorrichtung beim Hersteller für unterschiedliche Länder programmiert werden. Auch kann ein Benutzer die Preisanzeigevorrichtung auf einen anderen Umrechnungsfaktor umstellen, wenn er die Umrechnung in eine andere Landeswährung wünscht. Nach der Eingabe ist der Umrechnungsfaktor fest gespeichert und bleibt auch bei ausgeschaltetem Gerät erhalten, so daß die Möglichkeit der einfachen Umrechnung durch Drücken einer Taste erhalten bleibt. Der zweite Umrechnungsfaktor, der von dem Kehrwert des ersten Umrechnungsfaktors gebildet wird, kann entweder mit dem Abspeichern des ersten Umrechnungsfaktors automatisch gespeichert werden oder bei jedem Umrechnen in die entsprechende Währung berechnet werden, vorzugsweise indem anstatt der Verknüpfung "Multiplikation" die Verknüpfung "Division" gewählt wird, welche der Multiplikation mit dem Kehrwert entspricht.

Die Erfindung kann dadurch realisiert werden, daß einerseits für die Landeswährung und andererseits für die Wällrung EURO jeweils ein Währungs-Auswahlelement, vorzugsweise in Form einer Taste, vorgesehen ist, welches die Anzeigevorrichtung auf die entsprechende Währung einstellt. Ist in diesem Moment in der Anzeigevorrichtung ein Betrag in der anderen Währung angezeigt, wird dieser automatisch bei Betätigung der Währungstaste der zweiten Währung mit dem festen Umrechnungsfaktor multipliziert.

Alternativ kann das Währungs-Auswahlelement aus einer Umschalttaste bestehen, welche ein Umschalten von der jeweils in der Anzeigevorrichtung dargestellten Währung in die andere Währung ermöglicht und gleichzeitig die Multiplikation des angezeigten Wertes mit dem entsprechenden Umrechnungsfaktor bewirkt.

Vorzugsweise sollte die Preisanzeigevorrichtung mindestens ein Anzeigefeld aufweisen, in dem die aktuell angezeigte Währung dargestellt wird.

Für den Verbraucher ist es besonders vorteilhaft, eine kleine, einfache und kostengünstige Preisanzeigevorrichtung zu besitzen, die er mit sich führen und an beliebigen Einsatzorten einsetzen kann. Eine derartige Preisanzeigevorrichtung kann die Größe einer üblichen Checkkarte haben, auf der die Halbleiter-Bauelemente des Rechenwerkes, eine LCD-Digitalanzeige und die Tasten, welche die Zifferneingabe, die Kommaeingabe und die Auswahl bzw. das Umschalten der Währungen ermöglichen, angeordnet sind. Als Stromversorgung für eine derartige Preisanzeigevorrichtung ist vorzugsweise eine Solarzelle vorzusehen. Auf diese Weise wird die Notwendigkeit des Auswechselns und Entsorgens von Batterien als Energiequelle vermieden.

Derartige Preisanzeigevorrichtungen können als Serviceleistung eines Kaufhauses fest an den Einkaufswagen installiert werden. In deutschen Kaufhäusern hat sich die Anordnung von Münzschlössern, die durch Einschieben einer Pfand-Münze geöffnet werden können, zur Sicherung der Einkaufswagen durchgesetzt. Die erfindungsgemäße Preisanzeigevorrichtung kann ohne weiteres auf der flachen Oberfläche derartiger Münzschlösser angeordnet werden.

Es ist aber auch möglich, die erfindungsgemäße Preisanzeigevorrichtung in andere elektronische Rechenvorrichtungen zu integrieren. Beispielsweise kann durch die Anordnung von Währungs-Auswahlelementen insbesondere in Form einer Währungsumschalttaste oder zweier einzelner Währungs-Tasten auf herkömmlichen Taschenrechnern eine erfindungsgemäße Preisanzeigevorrichtung realisiert werden. Mit dem Taschenrechner können dann beliebige und komplexe Rechenoperationen durchgeführt werden. Durch Betätigung des jeweiligen Währung-Auswahlelementes kann der aktuell angezeigte Wert in die jeweils andere Währung umgerechnet werden.

Es ist auch möglich, die erfindungsgemäße Preisanzeigevorrichtung an Registrierkassen durch Anfügung einer Umschalttaste bzw. zweier diskreter Währungs-Tasten zu verwirklichen. Der Kassierer kann auf Wunsch des Kunden den jeweils angezeigten Wert durch einfachen Tastendruck in die andere Währung umrechnen.

In Verbindung mit einer Registrierkasse kann ein erfindungsgemäßes Auswahlelement auch zur Wahl der Währung eines kompletten Bonierungsvorganges gewählt werden. Ein Bonierungsvorgang umfaßt das Eingeben der Preise aller in einer Rechnung zu berücksichtigenden Waren und Dienstleistungen sowie das Aufsummieren dieser Preise sowie das Ausgeben der Endsumme ggf. das Hinzurechnen der gesetzlichen Mehrwertsteuer. Dadurch, daß für einen Übergangszeitraum bei der Währungsumstellung in den Ländern der Europäischen Union die wahlweise Verwendung der alten Landeswährung sowie der neuen EURO-Währung gestattet sein wird, besteht die Notwendigkeit, die Bonierung und den Rechnungsdruck je nach Wunsch des Kunden in einer dieser beiden Währungen durchzuführen. Für dieses Umschalten der Registrierkasse ist das vorerwähnte Bonierungs-Auswahlelement vorgesehen. Das Bonierungs-Auswahlelement kann nach der Frage des Kassierers nach der gewünschten Währung durch den Kassierer betätigt werden.

Bei einer bevorzugten Ausführungsform der erfindungsgemäßen Registrierkasse ist das Bonierungs-Auswahlelement vor der Registrierkasse angebracht, so daß es durch den Kunden bedient werden kann. Vorzugsweise erfolgt die Eingabe der Preise in einer einzigen Währung, welche das Unternehmen, das die Rechnung erstellt, für seine Buchführung ausgewählt hat. Alle Daten werden in der Registrierkasse in dieser Währung gespeichert, notwendigenfalls elektronisch weiterverarbeitet oder ausgedruckt. Unabhängig davon erfolgt die Anzeige und der Ausdruck der Rechnung für den Kunden in der durch das Bonierungs-Auswahlelement ausgewählten Währung. Für den Kassierer sollte eine eigene Kassiereranzeige vorgesehen sein, welche die in der festen Währung der Registrierkasse eingegebenen Preise zur Kontrolle anzeigt.

Vorzugsweise wirkt bei der erfindungsgemäßen Registrierkasse das Währungs-Auswahlelement gleichzeitig als Bonierungs-Auswahlelement. Es kann beispielsweise aus einem Druckknopf bestehen, bei dessen Betätigung zwischen zwei Leuchtanzeigen mit den beiden unterschiedlichen Währungen hin und hergeschaltet wird und dessen Betätigung vor der ersten Preiseingabe die für die Bonierung gewählte Währung festlegt. Bei anschließender Betätigung dieses Elementes kann zwar noch die Währung, die in der für den Kunden sichtbaren Anzeige dargestellt wird, in der oben beschriebenen Weise umgeschaltet werden. Auf die Währung, die für die Erstellung des Kassenbons und die Aufsummierung des zu zahlenden Betrages verwendet wird, hat die anschließende Betätigung jedoch keinen Einfluß. Dementsprechend kann der Kunde, auch wenn er die Rechnung in der für ihn neuen Währung EURO erhalten und bezahlen möchte, die in Rechnung gestellten Preise an der Kasse durch Umschalten der Währungsanzeige auf seine gewohnte Landeswährung kontrollieren.

Bei einer bevorzugten Ausführungsform ist die Registrierkasse mit zwei Wechselgeldfächern versehen, in denen sich Wechselgeld einmal in der alten Landeswährung und einmal in der neuen Währung EURO befindet. Am Ende eines Bonierungs-Vorgangs, wenn der Kunde den in Rechnung gestellten Betrag bezahlt, wird durch einen Auslösemechanismus der Registrierkasse das Wechselgeldfach mit der Währung geöffnet, die für den Bonierungs-Vorgang durch das Bonierungs-Auswahlelement ausgewählt wurde.

Die Registrierkasse kann neben den Eingabeelementen zusätzliche Vorrichtungen zur Preiseingabe, beispielsweise einen Barcode-Scanner umfassen, der mit einem Laserstrahl die auf den Produktverpackungen angeordneten Strichcodes (Barcodes) abtastet.

Schließlich kann die Erfindung auch in Computerterminals, z.B. am Schalter einer Bank, integriert werden. Hierzu können entweder die Währungs-Auswahlelemente auf der Tastatur des Computers angefügt werden oder bestimmte Anzeigeelemente (ICONS) durch das Computerprogramm erzeugt werden, welche bei ihrer Betätigung die Umrechnung des angezeigten Wertes zur Darstellung in der anderen Währung veranlassen.

Weitere Merkmale der Erfindung ergeben sich aus den Unteransprüchen und der nachfolgenden Zeichnungsbeschreibung. Die Zeichnungen zeigen in:
- Fig. 1: die Draufsicht auf eine erste Ausführungsform der erfindungsgemäßen Preisanzeigevorrichtung zur Umrechnung von DM-Beträgen in EURO-Beträge,
- Fig. 2: eine alternative Ausführungsform der erfindungsgemäßen Preisanzeigevorrichtung zur Umrechnung von Gulden-Beträgen in EURO-Beträge und
- Fig. 3: eine weitere Ausführungsform der erfindungsgemäßen Preisanzeigevorrichtung zur Umrechnung von Beträgen im britischen Pfund in die EURO-Währung.

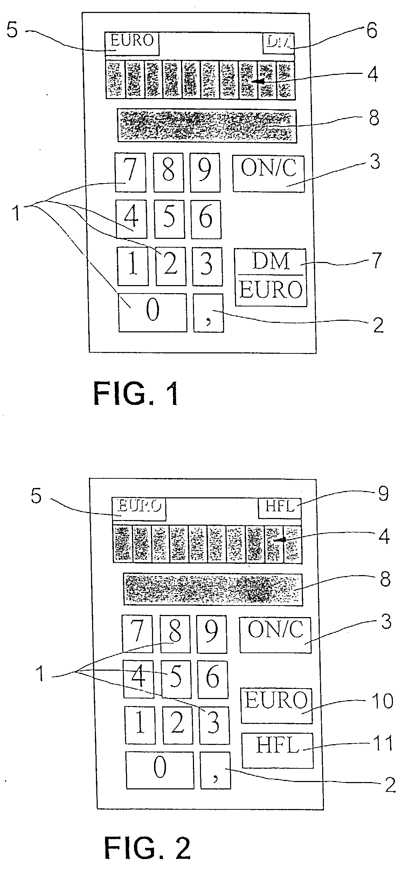

Die Fig. 1 zeigt die einfachste Ausführungsform einer erfindungsgemäßen Preisanzeigevorrichtung zur Umrechnung von DM-Beträgen in EURO-Beträge. Die Preisanzeigevorrichtung ist ähnlich einem Taschenrechner aufgebaut und weist im wesentlichen die Abmessungen einer üblichen Checkkarte oder Kreditkarte auf.

Sie umfaßt als Eingabeelemente zehn Zifferntasten 1 zur Eingabe der Ziffern 0 bis 9. Eine Punkt- oder Kommataste 2 ist vorgesehen, mit der die Nachkommastellen von den vorangehenden Dezimalstellen des einzugebenden Betrages getrennt werden können. Als Anzeigevorrichtung ist eine übliche Digitalanzeige 4 vorgesehen, welche aus einzelnen LCD-Anzeigeelementen besteht. Mit einer Einschalt- und Löschtaste 3 kann die Preisanzeigevorrichtung angeschaltet bzw. der in ihrer Anzeigevorrichtung 4 dargestellte Wert gelöscht werden. Zur Energieversorgung ist eine übliche Solarzelle 8 vorgesehen.

In dem Anzeigefenster der Preisanzeigevorrichtung sind neben der Digitalanzeige 4 zwei zusätzliche Anzeigefelder 5 und 6 vorgesehen. Das linke Anzeigefeld 5, welches ebenfalls aus einem LCD-Element besteht, ist aktiviert, wenn ein Betrag in der Währung EURO angezeigt wird. Dieser Zustand ist in der Fig. 1 dargestellt. Das rechte DM-Anzeigefeld 6 wird aktiviert, wenn ein Betrag in der Währung "Deutsche Mark" angezeigt wird.

Das wesentliche erfindungsgemäße Merkmal ist die DM/EURO-Umschalttaste 7. Beim Betätigen dieser Taste wird der in der Digitalanzeige dargestellte Wert mit dem entsprechenden Umrechnungsfaktor multipliziert und anschließend erneut angezeigt. Gleichzeitig erlischt das erste Währungs-Anzeigefeld und das zweite Währung-Anzeigefeld wird aktiviert.

Ausgehend von dem in Fig. 1 dargestellten Zustand, in dem das EURO-Anzeigefeld aktiviert ist, wird durch Betätigung der DM/EURO-Umschalttaste der angezeigte Wert mit dem Umrechnungsfaktor (etwa 0,51) multipliziert und der umgerechnete Wert angezeigt. Gleichzeitig erlischt das EURO-Anzeigefeld und das DM-Anzeigefeld wird aktiviert. Wird dann die DM/EURO-Umschalttaste ein zweites Mal gedrückt, so erlischt das DM-Anzeigefeld und das EURO-Anzeigefeld wird aktiviert.

Gleichzeitig wird der angezeigte DM-Wert mit dem entsprechenden Umrechnungsfaktor (etwa 1,95) multipliziert.

Die Fig. 2 zeigt eine ähnliche Preisanzeigevorrichtung, die ein Umrechnen zwischen den Währungen "holländische Gulden" und EURO ermöglicht. Anstatt des DM-Anzeigefeldes ist oben rechts ein Gulden (HFL) Anzeigefeld angeordnet, welches in der Fig. 2 aktiviert dargestellt ist. Anders als bei der Preisanzeigevorrichtung aus Fig. 1 sind hier zwei Währung-Auswahlelemente 10, 11 vorgesehen. In dem in Fig. 2 dargestellten Zustand, in dem ein Betrag in der Währung HFL angezeigt wird, tritt keine Änderung ein, wenn die Gulden-Taste 11 gedrückt wird. Wird allerdings die EURO-Taste 10 gedrückt, so wird der angezeigte Guldenwert durch Multiplikation mit dem entsprechenden Umrechnungsfaktor (z.Zt. 0,45) multipliziert und der EURO-Wert angezeigt.

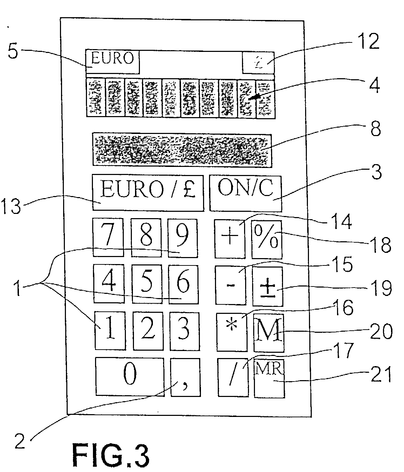

Die Fig. 3 zeigt eine erfindungsgemäße Preisanzeigevorrichtung, die in einen herkömmlichen Taschenrechner integriert ist. Diese Preisanzeigevorrichtung ist zur Umrechnung der Währung EURO in die Währung "britisches Pfund" (£) vorgesehen. Wie in der ersten Ausführungsform ist hierfür eine Umschalttaste, nämlich eine EURO/Pfund-Umschalttaste 13 neben der Einschalt- und Löschtaste 3 vorgesehen. Dementsprechend sind über der Digitalanzeige 4 ein EURO-Anzeigefeld 5 und ein Pfund-Anzeigefeld 12 vorgesehen. Das Pfund-Anzeigefeld 12 ist ausgeschaltet und das EURO-Anzeigefeld 5 ist aktiviert. Neben dem Ziffernblock mit den Zifferntasten 1 und der Kommataste 2 ist eine Vielzahl von Funktionstasten, nämlich eine Summentaste 14, eine Differenztaste 15, eine Multiplikationstaste 16, eine Divisionstaste 17, eine Prozenttaste 18, und eine Vorzeichentaste 19 zum Wechseln des Vorzeichens des angezeigten Wertes angeordnet. Weiterhin ist eine Speichertaste 20 zur Abspeicherung des angezeigten Wertes sowie eine Speicherabruftaste 21 zum Abrufen des gespeicherten Wertes aus dem Speicher des Rechenwerks in die Digitalanzeige 4 vorgesehen.

### Bezugszeichen:

- 1: Eingabeelement, Zifferntaste
- 2: Eingabeelement, Kommataste
- 3: Einschalt- und Löschtaste
- 4: Anzeigevorrichtung, Digitalanzeige
- 5: EURO-Anzeigefeld
- 6: DM-Anzeigefeld
- 7: Währungs-Auswahlelement, DM/EURO-Umschalttaste
- 8: Solarzelle
- 9: Gulden-Anzeigefeld
- 10: Währungs-Auswahlelement, EURO-Taste
- 11: Währungs-Auswahlelement, Gulden-Taste
- 12: Pfund-Anzeigefeld
- 13: Währungs-Auswahlelement, EURO/Pfund-Umschalttaste
- 14: Summentaste
- 15: Differenztaste
- 16: Multiplikationstaste
- 17: Divisionstaste
- 18: Prozenttaste
- 19: Vorzeichentaste
- 20: Speichertaste
- 21: Speicher-Abruftaste

## Patentansprüche

1. Preisanzeigevorrichtung mit Eingabeelementen (1,2) zur Eingabe der Ziffern von 0 bis 9 und eines Trennzeichens wie Punkt oder Komma, mit einer Anzeigevorrichtung (4) zur digitalen Darstellung von Zahlenwerten und mit einem Rechenwerk zur Durchführung von Rechenoperationen, **dadurch gekennzeichnet**, daß sie mindestens ein Währungs-Auswahlelement (7;10,11;13) umfaßt, bei dessen Betätigung ein in einer ersten Währung durch die Anzeigevorrichtung (4) angezeigter Wert mittels des Rechenwerks mit einem festen Umrechnungsfaktor multipliziert wird und der entsprechende Wert in einer zweiten Währung durch die Anzeigevorrichtung (4) dargestellt wird.

2. Preisanzeigevorrichtung nach Anspruch 1, **dadurch gekennzeichnet**, daß sie zwei Währungs-Auswahlelemente (10,11) umfaßt, wobei bei der Betätigung des ersten Währungs-Auswahlelements (10) die Umrechnung des angezeigten Wertes von der ersten in die zweite Währung bewirkt und die Betätigung des zweiten Währungs-Auswahlelements (11) die Umrechnung des angezeigten Wertes von der zweiten in die erste Währung bewirkt.

3. Preisanzeigevorrichtung nach Anspruch 1, **dadurch gekennzeichnet**, daß sie ein Währungs-Auswahlelement (7;13) umfaßt, welches bei einer ersten Betätigung die Umrechnung des angezeigten Wertes von der ersten in die zweite Währung und bei einer anschließenden Betätigung die Umrechnung des angezeigten Wertes von der zweiten in die erste Währung bewirkt.

4. Preisanzeigevorrichtung nach einem der vorangehenden Ansprüche, **dadurch gekennzeichnet**, daß sie mindestens ein Anzeigefeld (5,6,10,11) zur Angabe der jeweils durch die Anzeigevorrichtung (4) angezeigten Währung umfaßt.

5. Preisanzeigevorrichtung nach einem der vorangehenden Ansprüche, **dadurch gekennzeichnet**, daß sie als Energiequelle eine Solarzelle (8) aufweist.

6. Preisanzeigevorrichtung nach einem der vorangehenden Ansprüche, **dadurch gekennzeichnet**, daß sie zusätzliche als Funktionstasten (14-21) ausgebildete Eingabeelemente umfaßt, welche die Durchführung mathematischer Operationen mit den eingegebenen Werten, z.B. Addition, Subtraktion, Multiplikation, Division oder Potenzierung, durch das Rechenwerk bewirken.

7. Preisanzeigevorrichtung nach einem der vorangehenden Ansprüche, **dadurch gekennzeichnet**, daß sie Bestandteil eines Computers ist, dessen zentraler Prozessor (CPU) das Rechenwerk bildet und dessen Bildschirm die Anzeigevorrichtung bildet, wobei die Eingabeelemente und die Währungs-Auswahlelemente auf der Tastatur des Computers angeordnet sind.

8. Preisanzeigevorrichtung nach einem der vorangehenden Ansprüche, **dadurch gekennzeichnet**, daß die Eingabeelemente und die Währungs-Auswahlelemente durch Anzeigeelemente auf dem Bildschirm gebildet werden, welche mittels Steuervorrichtungen wie den Cursortasten der Tastatur oder einer Computer-Maus anwählbar und betätigbar sind.

9. Registrierkasse mit einem Druckwerk und mit einer Preisanzeigevorrichtung nach einem der vorangehenden Ansprüche, bei der mit den Eingabeelementen während eines Bonierungs-Vorgangs die Preise aller in einer Rechnung aufzunehmenden Waren oder Dienstleistungen eingegeben und aufsummiert werden, wobei das Druckwerk zu jedem Bonierungs-Vorgang einen Rechnungsausdruck erstellt, **dadurch gekennzeichnet**, daß sie ein Bonierungs-Auswahlelement umfaßt, durch dessen Betätigung die Währung für jeden Bonierungsvorgang und den dazugehörigen Rechnungsausdruck aus den beiden anzeigbaren Währungen auswählbar ist.

10. Registrierkasse nach Anspruch 9, **dadurch gekennzeichnet**, daß das Währungs-Auswahlelement gleichzeitig als Bonierungs-Auswahlelement wirkt.

11. Registrierkasse nach Anspruch 9 oder 10, **dadurch gekennzeichnet**, daß das Bonierungs-Auswahlelement für den Kunden vor der Registrierkasse bedienbar angeordnet ist.

12. Registrierkasse nach einem der Ansprüche 9 bis 11, **dadurch gekennzeichnet**, daß die mittels der Eingabeelemente eingegebenen Werte durch die Registrierkasse unabhängig der mittels des Bonierungs- oder Währungs-Auswahlelementes gewählten Währung in einer festgelegten Währung registriert und verarbeitet werden, wobei eine Kassierer-Anzeige die eingegebenen Werte dem Kassierer in dieser Währung anzeigt.

13. Registrierkasse nach einem der Ansprüche 9 bis 12, **dadurch gekennzeichnet**, daß sie zwei Wechselgeldfächer für Geld in den beiden anzeigbaren Währungen umfaßt, wobei am Ende eines Bonierungsvorgangs das Wechselgeldfach mit dem Geld in der durch das Bonierungs-Auswahlelement ausgewählten Währung geöffnet wird.

14. Registrierkasse nach einem der Ansprüche 9 bis 13, **dadurch gekennzeichnet**, daß sie zusätzliche Vorrichtungen zur Preisangabe, beispielsweise Barcode-Scanner, umfaßt.
